# EUROPEAN PATENT APPLICATION

(11) **EP 4 174 975 A1**
(43) Date of publication of application: **03.05.2023**
(21) Application number: 22201908.5
(22) Date of filing: 17.10.2022
(51) Int. Cl.: H01M 4/04

(54) **NEGATIVE ELECTRODE AND BATTERY**

(30) Priority: 27.10.2021 JP 2021175306
(71) Applicant: Prime Planet Energy & Solutions, Inc., Chuo-ku Tokyo 103-0022 (JP)
(72) Inventor: YOSHIDA, Hikaru, Tokyo, 103-0022 (JP)
(74) Representative: Kuhnen & Wacker Patent- und Rechtsanwaltsbüro PartG mbB

(57) **Abstract**

The present disclosure relates to a negative electrode comprising a substrate (10) and a negative electrode active material layer (50), wherein the negative electrode active material layer (50) has a first active material layer (51) and a second active material layer (52) in this order from a side closer to the substrate (10); in a transverse cross section parallel to a thickness direction, the first active material layer (51) has a number density of voids (40) having a diameter of 3 µm or more per unit area of less than 200/mm²; and in a transverse cross section parallel to a thickness direction, the second active material layer (52) has a number density of voids (40) having a diameter of 3 µm or more per unit area of from 200/mm² to 1500/mm². By the present disclosure, a negative electrode having a decreased battery resistance and having a capacity retention that is less likely to decrease even after an endurance test is provided.

## Description

This nonprovisional application is based on Japanese Patent Application No. 2021-175306 filed on October 27, 2021, with the Japan Patent Office, the entire contents of which are hereby incorporated by reference.

### BACKGROUND OF THE INVENTION

### Field of the Invention

The present disclosure relates to a negative electrode and a battery.

### Description of the Background Art

International Patent Publication No. WO 2011/114433 discloses a lithium secondary battery comprising a negative electrode active material layer that is composed of a current-collector-side active material layer and a surface-layer-side active material layer; and it also discloses that a negative electrode active material included in the surface-layer-side active material layer has a larger average specific surface area than a negative electrode active material included in the current-collector-side active material layer.

Japanese Patent Laying-Open No. 2021-96965 discloses a sintered body that is for use in a power storage device and that has a porous layer on the outer surface side; and it also discloses use of a particle-form polymer that burns away upon sintering, as a void-forming aid for forming the porous layer.

### SUMMARY OF THE INVENTION

When a negative electrode active material has a large specific surface area, the interface between active material particles and electrolyte solution increases, resulting in facilitated electrode reaction and decreased resistance. At the same time, side reaction also increases, resulting in an increase of irreversible lithium in an endurance test to compromise capacity retention.

In addition, a negative electrode active material with a large specific surface area often has a relatively small particle size and a relatively small amount of surface coating of coal, petroleum pitch, phenolic resin, and the like. As the particle size of the negative electrode active material decreases, the reaction area increases and thereby battery resistance is likely to decrease, but at the same time, the size of voids in the negative electrode active material layer decreases and, thereby, diffusion of electrolyte solution during charge and discharge may become inhibited and a sufficient level of input-output properties may not always be obtained. Further, the smaller the amount of surface coating of the negative electrode active material, the less strong the negative electrode active material particles, so when the layer including the negative electrode active material is rolled to a relatively high density, it can break and cause a decrease of endurance.

Furthermore, when a particle-form polymer that burns away upon sintering is used as a void-forming aid, the temperature during heat treatment for burning away the void-forming aid may exceed the heat resistance of the binder or the current-collecting foil, potentially causing an adverse impact on the negative electrode.

An object of the present disclosure is to provide a negative electrode having a decreased battery resistance (initial resistance) and having a capacity retention that is less likely to decrease even after an endurance test.

The present invention provides a negative electrode and a battery as described below.
[1] A negative electrode comprising:
   a substrate; and
   a negative electrode active material layer, wherein
   the negative electrode active material layer has a first active material layer and a second active material layer in this order from a side closer to the substrate,
   in a transverse cross section parallel to a thickness direction, the first active material layer has a number density of voids having a diameter of 3 µm or more per unit area of less than 200/mm², and
   in a transverse cross section parallel to a thickness direction, the second active material layer has a number density of voids having a diameter of 3 µm or more per unit area of from 200/mm² to 1500/mm².
[2] The negative electrode according to [1], wherein
   the first active material layer is composed of first active material particles,
   the second active material layer is composed of second active material particles, and
   an average particle size of the second active material particles is less than an average particle size of the first active material particles.
[3] The negative electrode according to [1] or [2], wherein a BET specific surface area of the second active material particles is more than a BET specific surface area of the first active material particles.
[4] The negative electrode according to any one of [1] to [3], wherein a mass density of the second active material layer per unit volume is less than a mass density of the first active material layer per unit volume.
[5] The negative electrode according to any one of [1] to [4], wherein a thickness of the second active material layer is from 10 µm to 40 µm.
[6] The negative electrode according to any one of [1] to [5], having a mass density per unit volume of 1.4 g/cm³ or more.
[7] The negative electrode according to any one of [1] to [6], wherein the second active material layer includes a thermoplastic resin that is degradable in an oxygen-containing atmosphere at a temperature of 200°C or more.
[8] A battery comprising the negative electrode according to any one of [1] to [7].

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic view illustrating an example of a negative electrode.
Fig. 2 is a conceptual view illustrating a capsule-shaped particle according to the present embodiment.
Fig. 3 is a schematic flowchart illustrating a first production method.
Fig. 4 is a first conceptual view illustrating applying according to the present embodiment.
Fig. 5 is a schematic view illustrating an example of applying according to the present embodiment.
Fig. 6 is a schematic flowchart illustrating a second production method.
Fig. 7 is a schematic view illustrating an example of an electrode assembly according to the present embodiment.
Fig. 8 is a schematic view illustrating an example of a battery according to the present embodiment.
Fig. 9 is a cross-sectional SEM image of a negative electrode layer in Examples.
Fig. 10 is a cross-sectional SEM image of a negative electrode layer in Comparative Examples.
Fig. 11 is a schematic view illustrating a process of assembling a test battery according to the present example.
Fig. 12 is a graph of resistance relative to the density of a negative electrode active material layer of a test battery.
Fig. 13 is a graph of capacity retention relative to the density of a negative electrode active material layer of a test battery.
Fig. 14 is a graph of resistance relative to the density of a negative electrode active material layer of a test battery.
Fig. 15 is a graph of capacity retention relative to the density of a negative electrode active material layer of a test battery.
Fig. 16 is a graph of resistance relative to the density of a negative electrode active material layer of a test battery.
Fig. 17 is a graph of capacity retention relative to the density of a negative electrode active material layer of a test battery.

### DESCRIPTION OF THE PREFERRED EMBODIMENTS

Next, embodiments of the present disclosure (also called "the present embodiment" hereinafter) will be described. It should be noted that the below description does not limit the scope of claims.

Herein, any geometric term (such as "perpendicular" and "parallel", for example) should not be interpreted solely in its exact meaning. For example, "perpendicular" may mean a geometric state that is deviated, to some extent, from exact "perpendicular". Any geometric term herein may include tolerances and/or errors in terms of design, operation, production, and/or the like.

The dimensional relationship in each figure may not necessarily coincide with the actual dimensional relationship. The dimensional relationship (in length, width, thickness, and the like) in each figure may have been changed for the purpose of assisting the understanding of the present disclosure.

Herein, the expression "consist essentially of" means a concept between "consist of" and "comprise". The expression "consist essentially of" means that an additional component may also be included in addition to an essential component or components, unless an object of the present disclosure is impaired. For example, a component that is usually expected to be included in the relevant technical field (such as impurities, for example) may be included as an additional component.

Herein, a numerical range such as "from 0.2 to 0.8" includes both the upper limit and the lower limit, unless otherwise specified. For example, "from 0.2 to 0.8" means a numerical range of "not less than 0.2 and not more than 0.8". Moreover, any numerical value selected from a certain numerical range may be used as a new upper limit and a new lower limit. For example, any numerical value from a certain numerical range may be combined with any numerical value described in another location of the present specification to set a new numerical range.

Herein, when a compound is represented by a stoichiometric composition formula such as "LiCoO₂", for example, this stoichiometric composition formula is merely a typical example. For example, when lithium cobalt oxide is represented as "LiCoO₂", the composition ratio of lithium cobalt oxide is not limited to "Li/Co/O = 1/1/2" but Li, Co, and O may be included in any composition ratio, unless otherwise specified. Alternatively, the composition ratio may be non-stoichiometric.

Herein, depending on the context, the terms "particle" and "void" may be used in singular, or may be used in plural, or may be used in both. For example, the term "particle" may be used in singular to mean an individual particle, or may be used in plural to mean a group of particles (powder).

The present disclosure may be applied to any type of battery. A lithium-ion battery is merely a part of the present embodiment.

### <Negative Electrode>

A negative electrode according to the present disclosure comprises a substrate and a negative electrode active material layer, wherein the negative electrode active material layer has a first active material layer and a second active material layer in this order from a side closer to the substrate; in a transverse cross section parallel to a thickness direction, the first active material layer has a number density of voids having a diameter of 3 µm or more per unit area of less than 200/mm²; and in a transverse cross section parallel to a thickness direction, the second active material layer has a number density of voids having a diameter of 3 µm or more per unit area of from 200/mm² to 1500/mm².

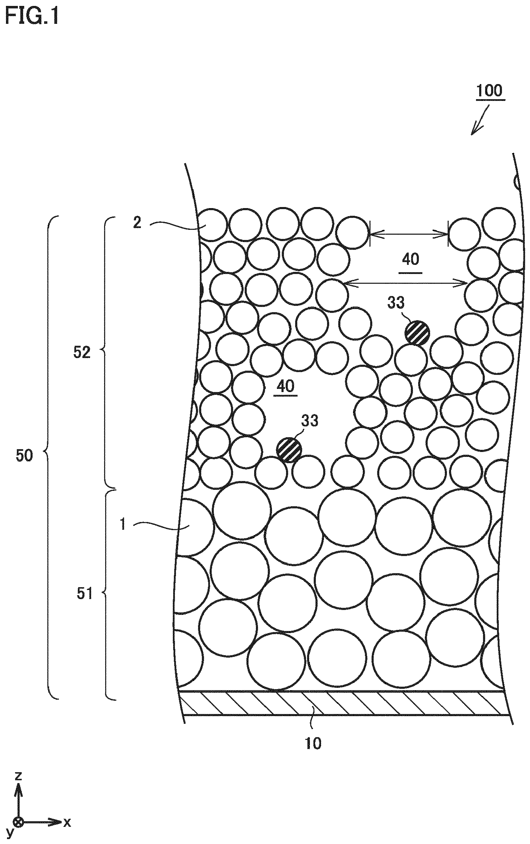

Fig. 1 illustrates a negative electrode 100. Negative electrode 100 comprises a substrate 10 and a negative electrode active material layer 50.

### (Substrate)

Substrate 10 is a conductive sheet. For example, substrate 10 may include an aluminum (Al) foil, a copper (Cu) foil, and/or the like. For example, substrate 10 may have a thickness from 5 µm to 50 µm. For example, on a surface of substrate 10, a covering layer may be formed. For example, the covering layer may include a conductive carbon material and/or the like. For example, the thickness of the covering layer may be less than that of negative electrode active material layer 50.

### (Negative Electrode Active Material Layer)

Negative electrode active material layer 50 has a first active material layer 51 and a second active material layer 52 in this order from a side closer to substrate 10. In a transverse cross section parallel to a thickness direction, first active material layer 51 has a number density of voids 40 having a diameter of 3 µm or more per unit area of less than 200/mm². In a transverse cross section parallel to a thickness direction, second active material layer 52 has a number density of voids 40 having a diameter of 3 µm or more per unit area of from 200/mm² to 1500/mm².

When the number density of voids having a diameter of 3 µm or more per unit area is within the above-described range in both the first active material layer and the second active material layer, battery resistance (initial resistance) is likely to be decreased and capacity retention tends not to decrease even after an endurance test. This is probably because the endurance of the negative electrode active material layer is enhanced by the presence of the first active material layer to make the capacity retention less likely to decrease even after an endurance test. It is also probably because the presence of the second active material layer on the surface side of the negative electrode active material layer facilitates diffusion of electrolyte solution into the negative electrode active material layer and facilitates a decrease of battery resistance.

In a transverse cross section parallel to a thickness direction, first active material layer 51 preferably has a number density of voids 40 having a diameter of 3 µm or more per unit area of less than 180/mm², more preferably less than 170/mm², further preferably less than 160/mm², particularly preferably less than 150/mm², especially preferably less than 100/mm², from the viewpoint of inhibiting capacity retention decrease after an endurance test. In a transverse cross section parallel to a thickness direction, the number density of voids 40 having a diameter of 3 µm or more per unit area in first active material layer 51 is 0/mm² or more, and, for example, it may be 1/mm² or more, or may be 5/mm².

In a transverse cross section parallel to a thickness direction, second active material layer 52 preferably has a number density of voids 40 having a diameter of 3 µm or more per unit area of from 220/mm² to 1450/mm², more preferably from 240/mm² to 1400/mm², further preferably from 260/mm² to 1350/mm², particularly preferably from 280/mm² to 1300/mm², especially preferably from 300/mm² to 1250/mm², from the viewpoint of decreasing battery resistance (initial resistance).

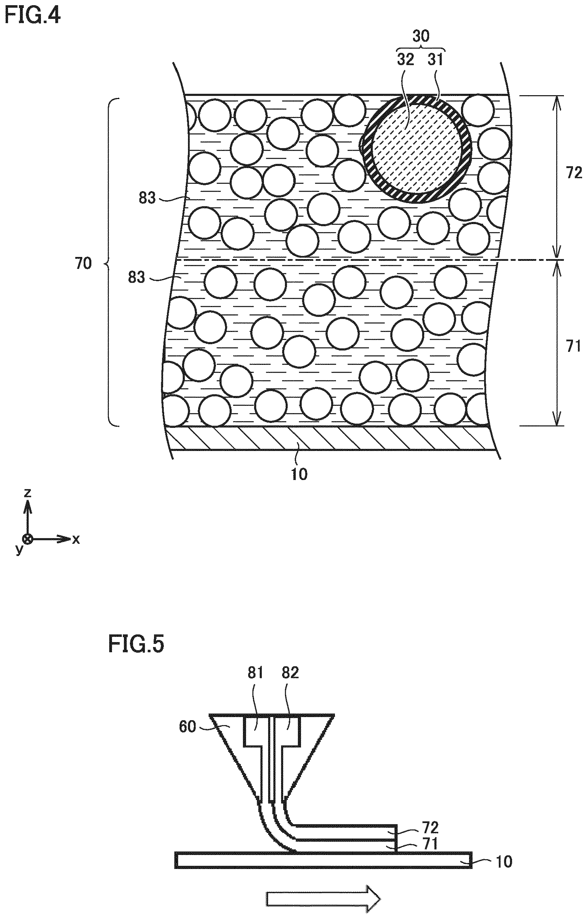

The number density of voids 40 having a diameter of 3 µm or more per unit area is measured in an SEM image of a transverse cross section parallel to a thickness direction of electrode 100 (active material layer 50). The SEM image of a transverse cross section parallel to a thickness direction refers to an SEM image captured in the y-axis direction in Fig. 5. At each of ten positions that are randomly selected in a transverse cross section of electrode 100, an SEM image is captured. That is, at least ten SEM images are prepared. In each SEM image, voids 40 having a diameter of 3 µm or more are counted. The number of voids 40 having a diameter of 3 µm or more is divided by the area of the view to calculate the number density. In each of the at least ten SEM images, the number density is calculated. The arithmetic mean of the at least ten values of number density is regarded as the number density of voids 40 having a diameter of 3 µm or more.

The diameter of void 40 having a diameter of 3 µm or more refers to the maximum diameter thereof in an SEM image of a transverse cross section parallel to a thickness direction of electrode 100 (negative electrode active material layer 50). The maximum diameter of void 40 having a diameter of 3 µm or more refers to the distance between two points located farthest apart from each other on the outline of the same void 40 having a diameter of 3 µm or more. Void 40 having a diameter of 3 µm or more may have a diameter from 3 µm to 100 µm, or may have a diameter from 5 µm to 50 µm, or may have a diameter from 10 µm to 30 µm, for example.

Void 40 having a diameter of 3 µm or more may have a shape attributable to a capsule-shaped particle 30 described below. Void 40 having a diameter of 3 µm or more may have a shape similar to spherical, for example. Void 40 having a diameter of 3 µm or more may have an aspect ratio from 1 to 5, for example, or may have an aspect ratio from 1 to 3, for example, or may have an aspect ratio from 1 to 2, or may have an aspect ratio from 1 to 1.5. The "aspect ratio" refers to the ratio of the long diameter to the short diameter. The aspect ratio is measured in an SEM image of a transverse cross section parallel to a thickness direction of electrode 100 (negative electrode active material layer 50). The maximum diameter in an SEM image as described above is regarded as the long diameter. Among diameters perpendicular to the line defining the long diameter, the maximum one is regarded as the short diameter. The aspect ratio is measured for ten or more voids 40 having a diameter of 3 µm or more. These ten or more voids 40 having a diameter of 3 µm or more are randomly selected. The arithmetic mean of the ten or more aspect ratios is regarded as the aspect ratio of voids 40 having a diameter of 3 µm or more.

At least some of voids 40 having a diameter of 3 µm or more may have an opening (a port) in a surface of negative electrode active material layer 50. The width of the opening of void 40 having a diameter of 3 µm or more may be smaller than its internal width. Each of the internal width and the opening width refers to a dimension in a direction perpendicular to the thickness direction of active material layer 50 (namely, a dimension in the x-axis direction in Fig. 1). When voids 40 having a diameter of 3 µm or more are open in the surface of active material layer 50, accepting ability is expected to be enhanced, for example.

The mass density of negative electrode active material layer 50 per unit volume may be from 0.8 g/cm³ to 2.0 g/cm³, or may be from 0.8 g/cm³ to 1.6 g/cm³, for example. Herein, the mass density per unit volume refers to an apparent density.

The mass density of first active material layer 51 per unit volume and that of second active material layer 52 may be the same or may be different from each other, but from the viewpoints of decreasing battery resistance and inhibiting capacity retention decrease after an endurance test, the mass density of second active material layer 52 per unit volume is preferably less than the mass density of first active material layer 51 per unit volume. The mass density of first active material layer 51 per unit volume is preferably from 1.0 g/cm³ to 2.0 g/cm³. The mass density of second active material layer 52 per unit volume is preferably from 0.5 g/cm³ to 2 g/cm³, more preferably from 0.8 g/cm³ to 1.8 g/cm³.

Negative electrode active material layer 50 may have a thickness from 10 µm to 200 µm, or may have a thickness from 50 µm to 100 µm, for example.

Each of the thickness of first active material layer 51 and that of second active material layer 52 may be from 5 µm to 100 µm, or may be from 15 µm to 50 µm, for example. The thickness of first active material layer 51 and that of second active material layer 52 may be the same, or may be different from each other. The thickness of each of negative electrode active material layer 50, first active material layer 51, and second active material layer 52 is measured in an SEM image as described above.

First active material layer 51 may be composed of first active material particles 1. Second active material layer 52 may be composed of second active material particles 2. Herein, the first active material particles and the second active material particles may be collectively called active material particles. First active material layer 51 and second active material layer 52 may further include a resin fragment 33. In negative electrode active material layer 50, both the first active material layer 51 and the second active material layer 52 may include resin fragment 33, or only the second active material layer 52 may include resin fragment 33 with first active material layer 51 not including resin fragment 33. First active material layer 51 and second active material layer 52 may further include a binder (not illustrated). First active material layer 51 and second active material layer 52 may further include a conductive material (not illustrated).

### (Active Material Particles)

The active material particles include a negative electrode active material. The negative electrode active material may include an optional component. The negative electrode active material may include, for example, at least one selected from the group consisting of graphite, soft carbon, hard carbon, Si, SiO, Si-based alloy, Sn, SnO, Sn-based alloy, and Li₄Ti₅O₁₂. The active material particles may consist essentially of the negative electrode active material. The active material particles may further include a component other than the negative electrode active material.

The active material particles may have any size. The average particle size of the active material particles may be from 1 µm to 30 µm, or may be from 1 µm to 20 µm, or may be from 1 µm to 10 µm, for example. Herein, the average particle size of the active material particles refers to a particle size in volume-based particle size distribution at which the cumulative particle volume (accumulated from the side of small particle sizes) reaches 50% of the total particle volume. Herein, the average particle size of the active material particles may also be expressed as D50. The average particle size may be measured by laser diffraction and scattering.

The average particle size of the first active material particles and that of the second active material particles may be the same or may be different from each other, but from the viewpoints of decreasing battery resistance (initial resistance) and inhibiting capacity retention decrease after an endurance test, the average particle size of the second active material particles is preferably less than the average particle size of the first active material particles.

The average particle size of the first active material particles is preferably from 2 µm to 30 µm, more preferably from 5 µm to 20 µm, further preferably more than 10 µm and not more than 20 µm.

The average particle size of the second active material particles is preferably from 1 µm to 20 µm, more preferably from 4 µm to 10 µm.

The first active material particles may have a BET specific surface area from 0.5 m²/g to 10 m²/g, for example, and preferably has a BET specific surface area from 0.5 m²/g to 3 m²/g. The second active material particles may have a BET specific surface area from 1 m²/g to 10 m²/g, for example, and preferably has a BET specific surface area from 3 m²/g to 9 m²/g. The BET specific surface area of the first active material particles and that of the second active material particles may be the same or may be different from each other, but from the viewpoints of decreasing battery resistance (initial resistance) and inhibiting capacity retention decrease after an endurance test, the BET specific surface area of the second active material particles is preferably more than the BET specific surface area of the first active material particles. The BET specific surface area is measured by a BET multi-point method.

### (Resin Fragment)

Resin fragment 33 is placed inside void 40 having a diameter of 3 µm or more. Resin fragment 33 includes a thermoplastic resin. Resin fragment 33 may be a deformed outer shell of a capsule-shaped particle (described below) that is used for forming void 40 having a diameter of 3 µm or more. Resin fragment 33 may be included in both the first active material layer 51 and the second active material layer 52. Resin fragment 33 may be included only in second active material layer 52, without being included in first active material layer 51. Resin fragment 33 may have any shape. Resin fragment 33 may be flakes or may be particles, for example. Resin fragment 33 placed inside void 40 having a diameter of 3 µm or more is not likely to substantially inhibit electronic conduction or ionic conduction inside negative electrode active material layer 50. In another embodiment according to the present disclosure, at least part of resin fragment 33 may be removed from void 40 having a diameter of 3 µm or more by an appropriate method (such as sucking and/or air blowing, for example).

### (Capsule-Shaped Particle)

The capsule-shaped particles function as a void-forming aid. The capsule-shaped particles shrink within the negative electrode active material layer (or within a coating film) to form voids. The shape of the voids may be controlled by changing the shape of the capsule-shaped particles. Within negative electrode active material layer 50, preferably within second active material layer 52, the capsule-shaped particles can form voids 40 having a diameter of 3 µm or more. The capsule-shaped particles may have an average particle size from 1 µm to 100 µm, for example. The capsule-shaped particles may have an average particle size from 5 µm to 40 µm, for example.

For example, the average particle size of the capsule-shaped particles and the desired thickness of the first active material layer or the second active material layer may satisfy a certain relationship. For example, the ratio of the average particle size of the capsule-shaped particles to the thickness of the first active material layer or the second active material layer may be from 0.05 to 0.4. When the ratio of the average particle size of the capsule-shaped particles to the thickness of the first active material layer or the second active material layer is from 0.05 to 0.4, slurry application properties tend to be enhanced. The ratio of the average particle size of the capsule-shaped particles to the thickness of the first active material layer or the second active material layer may be from 0.1 to 0.4, or may be from 0.2 to 0.3, for example.

During the process of electrode production, the capsule-shaped particles according to the present embodiment may expand and then shrink. The capsule-shaped particles, while they are in the expanded state, may have an average particle size greater than that of the active material particles. In the configuration in which the capsule-shaped particles are larger in size than the active material particles, voids that are larger in size than the active material particles may be formed.

The capsule-shaped particles may have any particle shape. The capsule-shaped particles may be spherical, columnar, plate-like, and/or the like, for example.

By changing the amount of the capsule-shaped particles, the amount of voids and the number density of voids in the first active material layer or the second active material layer may be controlled, for example. The amount of the capsule-shaped particles may have a mass fraction from 0.01% to 5% relative to the other solid matter, for example. "The other solid matter" refers to the sum of the components included in the slurry, except the dispersion medium and the capsule-shaped particles. For example, the capsule-shaped particles may have a mass fraction from 0.05% to 3%, or may have a mass fraction from 0.1% to 1%, or may have a mass fraction from 0.2% to 0.8%, or may have a mass fraction from 0.3% to 0.7%, relative to the other solid matter.

The capsule-shaped particle includes a thermoplastic resin. In the present embodiment, a thermoplastic resin with particular characteristics is selected. More specifically, the thermoplastic resin may soften when heated in the co-presence of an organic solvent. The thermoplastic resin in the co-presence of an organic solvent may have a softening point from 60°C to 160°C, for example. The thermoplastic resin in the co-presence of an organic solvent may have a softening point from 100°C to 140°C, for example. The thermoplastic resin in the co-presence of an organic solvent may have a softening point of 100°C or less, for example. For example, the thermoplastic resin may be a thermoplastic resin that is degradable in an oxygen-containing atmosphere at a temperature of 200°C or more. Second active material layer 52 may include a thermoplastic resin that is degradable in an oxygen-containing atmosphere at a temperature of 200°C or more.

For example, the thermoplastic resin may be a material that does not substantially soften only by contact with an organic solvent. For example, the thermoplastic resin may be a material that does not substantially dissolve in an organic solvent. For example, the thermoplastic resin may partially dissolve in an organic solvent.

The thermoplastic resin may be formed by polymerization of one or more types of monomers. The thermoplastic resin may include a constitutional repeating unit derived from, for example, at least one selected from the group consisting of nitrile-based monomers, carboxy-group-containing monomers, (meth)acrylic-acid-ester-based monomers, vinyl-based monomers, and vinylidene-based monomers. The nitrile-based monomers may include, for example, at least one selected from the group consisting of acrylonitrile and methacrylonitrile. The carboxy-group-containing monomers may include, for example, at least one selected from the group consisting of acrylic acid and methacrylic acid. The "(meth)acrylic" according to the present embodiment refers to acrylic or methacrylic. The (meth)acrylic-acid-ester-based monomers may include, for example, at least one selected from the group consisting of methyl (meth)acrylate, ethyl (meth)acrylate, and butyl (meth)acrylate. The vinyl-based monomers may include vinyl chloride and/or the like, for example. The vinylidene-based monomers may include vinylidene chloride and/or the like, for example.

The thermoplastic resin may include, for example, at least one selected from the group consisting of acrylic-based resins, acrylonitrile-based resins, and vinylidene-chloride-based resins.

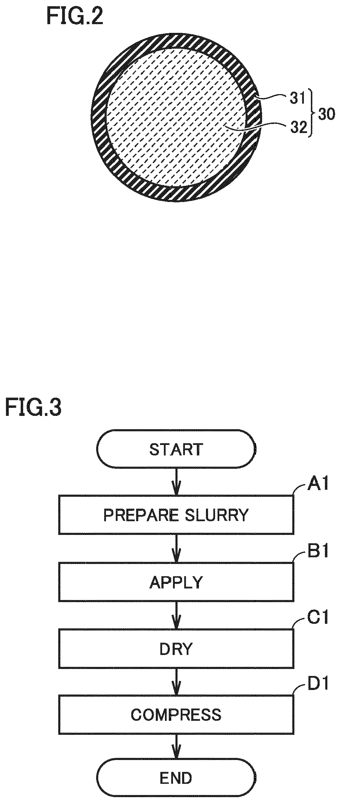

Fig. 2 is a conceptual view illustrating a capsule-shaped particle according to the present embodiment. Capsule-shaped particle 30 includes an outer shell 31. Capsule-shaped particle 30 may be hollow, for example. Capsule-shaped particle 30 may include outer shell 31 and an enclosed content 32. For example, commercially available thermally expandable microcapsules may be used as capsule-shaped particles 30.

Outer shell 31 includes the above-described thermoplastic resin. Enclosed content 32 includes at least one selected from the group consisting of a volatile substance and a gas. When thermally expandable microcapsules before expanded are used as capsule-shaped particles 30, enclosed content 32 includes a volatile substance. The volatile substance is a substance that generates gas when heated. The volatile substance may include a liquid hydrocarbon and/or the like, for example. The volatile substance may include, for example, at least one selected from the group consisting of butane, pentane, hexane, heptane, and octane. When enclosed content 32 includes the volatile substance, the volatile substance may have a volume fraction of, for example, not less than 5% and less than 100% relative to capsule-shaped particles 30. For example, the volatile substance may have a volume fraction from 10% to 50%, or may have a volume fraction from 10% to 40%, relative to capsule-shaped particles 30.

In the present embodiment, the volume fraction of enclosed content 32 is measured in a cross-sectional SEM (Scanning Electron Microscope) image of capsule-shaped particle 30. A plurality of capsule-shaped particles 30 are made to be embedded in a predetermined resin. The resin is cut to prepare a cross-sectional sample. At this point, enclosed content 32 may be substantially removed. The surface of the cross-sectional sample is cleaned. An SEM is used to observe the cross sections of capsule-shaped particles 30. In the cross sections of capsule-shaped particles 30, the area of outer shell 31 (s1) and the area of a hollow portion formed by enclosed content 32 (s2) are measured. The volume fraction of enclosed content 32 is calculated by the following equation: Volume fraction (%) = s2/(s1+s2). For ten or more capsule-shaped particles 30, the volume fraction of enclosed content 32 is measured. The arithmetic mean of these ten or more values of volume fraction is regarded as the volume fraction of enclosed content 32. In the present embodiment, the volume fraction of enclosed content 32 is significant to its integer places. It is rounded to the nearest integer.

When thermoplastic microcapsules after expanded are used as capsule-shaped particles 30, enclosed content 32 includes a gas. The gas may include hydrocarbon gas and/or the like, for example. When enclosed content 32 includes a gas, the gas may have a volume fraction of, for example, not less than 50% and less than 100% relative to capsule-shaped particles 30. For example, the gas may have a volume fraction of not less than 70% and less than 100%, or may have a volume fraction of not less than 95% and less than 100%, or may have a volume fraction from 95% to 99%, relative to capsule-shaped particles 30.

### (Binder)

The binder binds the active material particles to each other. The binder binds the active material particles and the substrate (described below) to each other. The binder may include an optional component. The binder may include, for example, at least one selected from the group consisting of polyvinylidene difluoride (PVdF), poly(vinylidenefluoride-co-hexafluoropropylene) (PVdF-HFP), polytetrafluoroethylene (PTFE), polyacrylic acid (PAA), carboxymethylcellulose (CMC), polyethylene oxide (PEO), and styrene-butadiene rubber (SBR). In each of the first active material layer and the second active material layer, the amount of the binder may be, for example, from 0.1 parts by mass to 10 parts by mass relative to 100 parts by mass of the active material particles.

### (Conductive Material)

The conductive material forms electron conduction paths in negative electrode active material layer 50. The conductive material may include an optional component. The conductive material may include, for example, at least one selected from the group consisting of carbon black, carbon fiber, carbon nanotube (CNT), graphene flake, metal particle, and metal fiber. In each of the first active material layer and the second active material layer, the amount of the conductive material may be, for example, from 0.1 parts by mass to 10 parts by mass relative to 100 parts by mass of the active material particles.

### (Method of Producing Negative Electrode)

Negative electrode 100 (see Fig. 1) may be produced by a first production method. Negative electrode 100 may be formed by a second production method.

### (First Production Method)

The first production method may include "(A1) Preparing a slurry", "(B1) Applying", "(C1) Drying", and "(D1) Compressing". Fig. 3 is a schematic flowchart illustrating the first production method.

### (A1) Preparing Slurry

The first production method may include preparing a slurry by mixing the active material particles, the capsule-shaped particles, the binder, and an organic solvent. First active material layer 51 and second active material layer 52 may be formed using a first active material layer slurry and a second active material layer slurry, respectively. Herein, the first active material layer slurry and the second active material layer slurry may also be collectively called a slurry. The slurry may include the active material particles, the capsule-shaped particles, the binder, the organic solvent, the conductive material, and the like. Only the second active material layer slurry may include the capsule-shaped particles, with the first active material layer slurry not including the capsule-shaped particles.

In the first production method, the organic solvent is used as a dispersion medium in the slurry. The organic solvent functions as a dispersion medium in the slurry. Part of the components (such as the binder, for example) may be dissolved in the organic solvent. The organic solvent may include, for example, at least one selected from the group consisting of N-methyl-2-pyrrolidone (NMP), tetrahydrofuran (THF), dimethylformamide (DMF), methyl ethyl ketone (MEK), and dimethyl sulfoxide (DMSO). The amount of the organic solvent is not particularly limited. In other words, the solid matter concentration (the mass fraction of solid matter) of the slurry is not particularly limited. The slurry may have a solid matter concentration from 40% to 80%, for example.

In the first production method, any stirring apparatus, any mixing apparatus, and/or any dispersing apparatus may be used. For example, materials are added in a predetermined formulation ratio to a stirring vessel of a stirring apparatus, and stirred. Thus, a slurry is prepared. In addition to the active material particles, the capsule-shaped particles, the binder, and the organic solvent, a conductive material and/or the like, for example, may also be mixed in the slurry. The stirring conditions (stirring duration, stirring rate, and/or the like) are adjusted as appropriate. The order for adding the materials is not limited. All the materials may be added at once, or the materials may be added sequentially.

### (B1) Applying

The first production method may include applying the slurry to a surface of the substrate to form a coating film. In the present embodiment, any applicator may be used to apply the slurry to a surface of the substrate. For example, a slot die coater, a roll coater, and/or the like may be used. The applicator may be capable of multilayer application.

The coating film may be formed by double-layer application, for example. By double-layer application, a first coating film for the first active material layer and a second coating film for the second active material layer may be formed sequentially, or may be formed substantially at the same time. Herein, the first coating film and the second coating film may be collectively called a coating film.

Fig. 4 is a conceptual view illustrating applying. By double-layer application, a first coating film 71 may be formed so as not to include the capsule-shaped particles and a second coating film 72 may be formed so as to include capsule-shaped particles 30.

As illustrated in Fig. 5, substrate 10 may be moved in the direction of the arrow with the use of a slot die coater 60, followed by applying a first active material layer slurry 81 to one side of substrate 10 to form first coating film 71, and then followed by applying a second active material layer slurry 82 over the resultant to form second coating film 72.

### (C1) Drying

The first production method may include drying the coating film by heating. In the present embodiment, any drying apparatus may be used as long as it is capable of heating the coating film. For example, a hot-air dryer and/or the like may be used to heat the coating film.

When a coating film 70 is heated, capsule-shaped particles 30 (see Fig. 3) are heated in the co-presence of an organic solvent 83. The thermoplastic resin (outer shell 31) softens to allow capsule-shaped particles 30 to shrink. As a result, voids 40 having a diameter of 3 µm or more may be formed. Inside voids 40 having a diameter of 3 µm or more, resin fragment 33 remains. Resin fragment 33 may be a deformed outer shell 31 (see Fig. 3). The "heating" according to the present embodiment refers to application of heat. The temperature of the heated object may not necessarily increase. The heating temperature according to the present embodiment refers to the temperature inside the vessel of the dryer. The heating temperature (the drying temperature) is not particularly limited as long as it can cause the thermoplastic resin to soften. The heating temperature may be from 60°C to 200°C, or may be from 80°C to 150°C, or may be from 100°C to 120°C, for example.

When coating film 70 is further heated, organic solvent 83 (see Fig. 3) may evaporate. Thus, organic solvent 83 may be substantially removed. When coating film 70 is heated, enclosed content 32 of capsule-shaped particles 30 may also evaporate. Thus, enclosed content 32 may also be substantially removed.

### (D1) Compressing

The first production method may include compressing coating film 70 after drying, to form negative electrode active material layer 50, and thereby producing electrode 100. In the present embodiment, any compressing apparatus may be used. For example, a rolling mill and/or the like may be used. Coating film 70 after drying is compressed and thereby negative electrode active material layer 50 is formed, and thus electrode 100 is completed. Electrode 100 may be cut into a predetermined planar size, according to the specifications of the battery. Electrode 100 may be cut into a belt-like planar shape, for example. Electrode 100 may be cut into a rectangular planar shape, for example.

Compressing may alter the shape of the voids to some extent. However, the voids according to the present embodiment may maintain the predetermined shape and size after compressing.

### (Second Production Method)

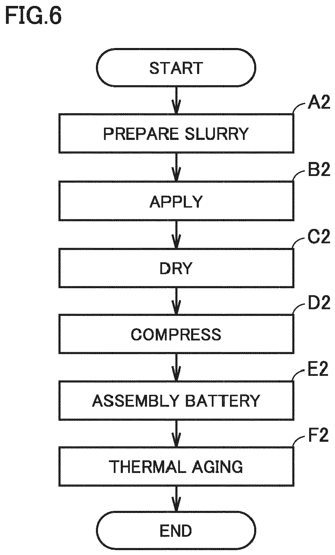

Fig. 6 is a schematic flowchart illustrating the second production method.

The second production method according to the present embodiment is a method of producing a battery. The second production method may include "(A2) Preparing a slurry", "(B2) Applying", "(C2) Drying", "(D2) Compressing", "(E2) Assembling a battery", and "(F2) Thermal aging". In the second production method, after the negative electrode is produced, voids may be formed in the battery. The second production method may further include, for example, "Initial charging", "Initial discharging", and the like between "(E2) Assembling a battery" and "(F2) Thermal aging".

### (A2) Preparing Slurry

The second production method may include preparing a slurry by mixing the active material particles, the capsule-shaped particles, the binder, and an aqueous solvent. In the second production method, the aqueous solvent is used as a dispersion medium in the slurry. Except for using an aqueous solvent, the same operation as in "(A1) Preparing a slurry" in the first production method may be carried out in "(A2) Preparing a slurry" in the second production method.

### (Aqueous Solvent)

The aqueous solvent includes water (such as ion-exchanged water, for example). The aqueous solvent may consist essentially of water. In addition to water, the aqueous solvent may further include a polar organic solvent miscible with water. The aqueous solvent may further include an alcohol, a ketone, and/or the like, for example.

### (B2) Applying

The second production method may include applying the slurry to a surface of the substrate to form a coating film. In "(A2) Applying" in the second production method, the same operation as in "(A1) Applying" in the first production method may be carried out.

### (C2) Drying

The second production method may include drying the coating film by heating. Also in the second production method, any drying apparatus may be used.

The aqueous solvent may evaporate at a relatively low heating temperature. The heating temperature may be from 40°C to 200°C, or may be from 40°C to 100°C, or may be from 50°C to 90°C, or may be from 60°C to 80°C, for example.

The thermoplastic resin included in the capsule-shaped particles may be unlikely to soften upon contact with the aqueous solvent. In addition, the heating temperature may be set low. Therefore, in the second production method, in the negative electrode active material layer after drying, the capsule-shaped particles may remain without shrinking. When the heating temperature for drying does not reach the temperature at which the capsule-shaped particles start expanding, the capsule-shaped particles may be heated and expanded before "(A2) Preparing a slurry".

### (D2) Compressing

The second production method may include compressing the coating film after drying, to form a negative electrode active material layer, and thereby producing a negative electrode. In "(D2) Compressing" in the second production method, the same operation as in "(D1) Compressing" in the first production method may be carried out. The negative electrode active material layer after drying is compressed, and thereby a negative electrode is completed. In the negative electrode active material layer after compressing, the capsule-shaped particles may remain without substantially shrinking. The negative electrode may be cut into a predetermined planar size, according to the specifications of the battery.

### (E2) Assembling Battery

The second production method may include assembling a battery that includes the negative electrode and an electrolyte solution.

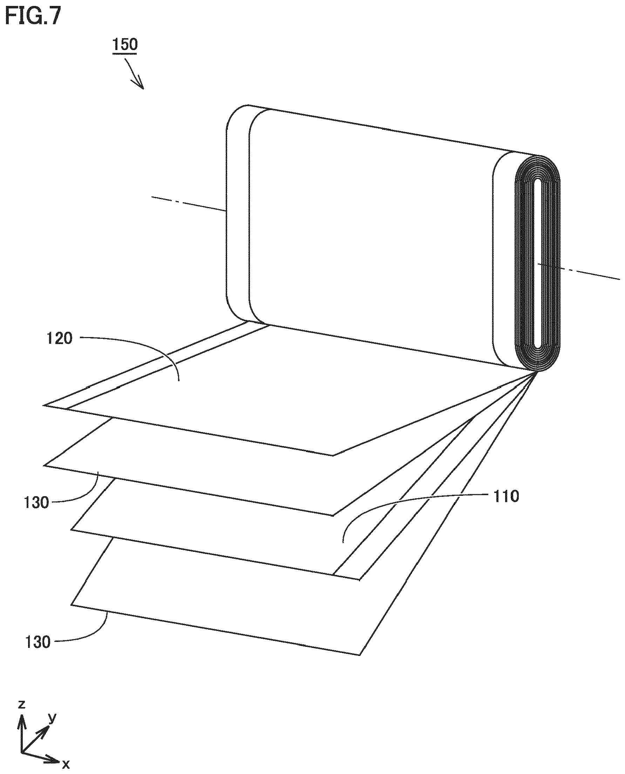

Fig. 7 is a schematic view illustrating an example of an electrode assembly according to the present embodiment.

For example, an electrode assembly 150 is formed. Electrode assembly 150 is a wound-type one. However, a wound-type one is merely an example. The electrode assembly according to the present embodiment may be a stack-type one. Electrode assembly 150 includes a positive electrode 110, a separator 130, and a negative electrode 120. Each of positive electrode 110, separator 130, and negative electrode 120 is a belt-shaped sheet. Positive electrode 110, separator 130, and negative electrode 120 may be stacked and then wound spirally to form electrode assembly 150. Two separators 130 may be used. After the winding, electrode assembly 150 may be formed into a flat shape.

In the second production method, positive electrode 110 may be produced by the processes from "(A2) Preparing a slurry" to "(D2) Compressing".

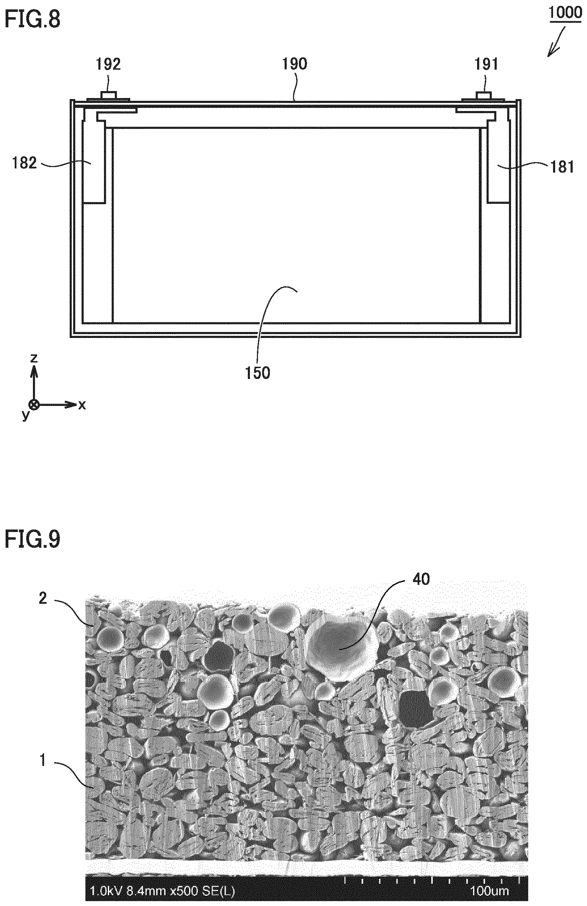

Fig. 8 is a schematic view illustrating an example of a battery according to the present embodiment.

A housing 190 is prepared. Housing 190 may have any configuration. For example, housing 190 may be a metal container and/or the like. For example, housing 190 may be a pouch made of an aluminum-laminated film. For example, housing 190 may be prismatic or cylindrical. For example, housing 190 may have an inlet (not illustrated) through which the electrolyte solution is to be injected.

In housing 190, electrode assembly 150 is placed. For example, electrode assembly 150 may be connected to a positive electrode terminal 191 via a positive electrode current-collecting member 181. For example, electrode assembly 150 may be connected to a negative electrode terminal 192 via a negative electrode current-collecting member 182.

An electrolyte solution (not illustrated) is prepared. The electrolyte solution includes a supporting electrolyte and an organic solvent. Into housing 190, the electrolyte solution is injected. Electrode assembly 150 is impregnated with the electrolyte solution. After the electrolyte solution is injected, housing 190 is hermetically sealed. Thus, a battery 1000 is assembled. After battery 1000 is assembled, initial charging, initial discharging, and/or the like may be carried out, for example.

### «(F2) Thermal Aging»

The second production method includes performing thermal aging of the battery. By the thermal aging of the battery, the battery is completed. The "thermal aging" according to the present embodiment refers to heating the battery for a predetermined length of time. For example, the SOC (State Of Charge) of the battery is adjusted. In the present embodiment, the state in which a capacity corresponding to the rated capacity has been charged is defined as an SOC of 100%. The SOC may be adjusted to a value from 40% to 80%, for example.

After the SOC adjustment, the battery is stored for a predetermined length of time in a thermostatic chamber, for example. The temperature inside the vessel of the thermostatic chamber may be from 40°C to 120°C, or may be from 60°C to 90°C, or may be from 70°C to 80°C, for example. The storage duration may be from 1 hour to 48 hours, or may be from 12 hours to 24 hours, for example.

In the second production method, the thermoplastic resin included in the capsule-shaped particles softens upon contact with the electrolyte solution. When the thermoplastic resin softens, the capsule-shaped particles may shrink to form voids in the active material layer.

The thermoplastic resin in the second production method may be, for example, a material that softens only by contact with the electrolyte solution (the organic solvent). The thermoplastic resin in the second production method may be, for example, a material that softens when heated in the co-presence of the electrolyte solution (the organic solvent). Therefore, the thermoplastic resin may soften during the time between the electrolyte solution injection and the thermal aging, for example. The thermoplastic resin may soften at the time of the thermal aging. In other words, voids may be formed during the time between the electrolyte solution injection and the thermal aging, or voids may be formed at the time of the thermal aging.

### <Battery>

Battery 1000 according to the present embodiment (see Fig. 8) may be used for any application. For example, battery 1000 may be used as a main electric power supply or a motive force assisting electric power supply in an electric vehicle. A plurality of batteries 1000 (cells) may be connected together to form a battery module or a battery pack.

The battery includes an electrode and an electrolyte solution. The structure of the battery is not particularly limited. An example of the structure is as described above. The battery may further include a housing, a separator, and the like, in addition to the electrode and the electrolyte solution.

### (Electrode)

The electrode refers to at least one of a positive electrode and a negative electrode. The negative electrode may include the negative electrode as described above. In the present embodiment, voids are formed in the negative electrode. As a result, battery resistance is expected to be decreased.

The positive electrode may include active material particles including a positive electrode active material. The positive electrode active material may include an optional component. The positive electrode active material may include, for example, at least one selected from the group consisting of LiCoO₂, LiNiO₂, LiMnO₂, LiMn₂O₄, Li(NiCoMn)O₂, Li(NiCoAl)O₂, and LiFePO₄. Here, the expression "(NiCoMn)" in the composition formula "Li(NiCoMn)O₂", for example, means that the constituents within the parentheses are regarded as collectively taking up one fraction in the entire composition ratio. The active material particles included in the positive electrode may consist essentially of the positive electrode active material. The active material particles included in the positive electrode may further include a component other than the positive electrode active material, and, for example, to a surface of the active material particle, an oxide, a carbide, a boride, a phosphide, a halide, and/or the like may be adhered. The active material particles included in the positive electrode may have any size.

### (Electrolyte Solution)

The electrolyte solution includes a supporting electrolyte and an organic solvent. The electrolyte solution may further include an optional additive, in addition to the supporting electrolyte and the organic solvent. The organic solvent is aprotic. The organic solvent may include, for example, at least one selected from the group consisting of ethylene carbonate (EC), propylene carbonate (PC), ethyl methyl carbonate (EMC), dimethyl carbonate (DMC), and diethyl carbonate (DEC). The supporting electrolyte is dissolved in the organic solvent. The supporting electrolyte may include an optional component. The supporting electrolyte may include, for example, at least one selected from the group consisting of LiPF₆, LiBF₄, and LiN(FSO₂)₂. The supporting electrolyte may have a concentration from 0.5 mol/L to 2.0 mol/L, for example.

### (Separator)

The battery may further include a separator (see reference numeral 130 in Fig. 7). At least part of the separator is interposed between the positive electrode and the negative electrode. The separator separates the positive electrode from the negative electrode. The separator may have a thickness from 10 µm to 30 µm, for example. The separator is porous. The separator is electrically insulating. The separator may be made of polyolefin, for example. The separator may have a monolayer structure, for example. The separator may consist of a polyethylene (PE) layer, for example. The separator may have a multilayer structure, for example. The separator may have a three-layer structure, for example. The separator may include a polypropylene (PP) layer, a PE layer, and a PP layer, for example. The PP layer, the PE layer, and the PP layer may be stacked in this order. On a surface of the separator, a ceramic layer and/or the like may be formed, for example.

### [Examples]

Next, examples according to the present disclosure (hereinafter also called "the present example") will be described. It should be noted that the below description does not limit the scope of claims. "%" and "part(s)" in the examples refer to mass% and part(s) by mass, respectively, unless otherwise specified.

### <Producing Negative Electrode>

Negative electrodes No. 1 to No. 8 were produced.

### <<(A1) Preparing Slurry>>

The below materials were prepared.
Active material particles 1: graphite (average particle size, 16 µm; BET specific surface area, 2.9 m²/g)
Active material particles 2: graphite (average particle size, 7 µm; BET specific surface area, 5.1 m²/g)
Binder: CMC, SBR
Capsule-shaped particles: thermally expandable microcapsules (after expanded)
Aqueous solvent: water
Substrate: Cu foil

The materials in the below-specified mass ratio were mixed with the aqueous solvent to prepare slurries 1 to 4. The capsule-shaped particles were heated and expanded, before mixed.
Slurry 1: (negative electrode active material 1)/CMC/SBR = 98.3/0.7/1
Slurry 2: (negative electrode active material 1)/CMC/SBR/(capsule-shaped particles) = 97.5/0.7/1/0.8
Slurry 3: (negative electrode active material 2)/CMC/SBR = 98.3/0.7/1
Slurry 4: (negative electrode active material 2)/CMC/SBR/(capsule-shaped particles) = 97.5/0.7/1/0.8

### <<(B1) Applying>>

A first active material layer slurry was applied to one side of the substrate to form a first coating film, and over the resultant, a second active material layer slurry was applied to form a second coating film. The first coating film and the second coating film were formed in such a manner that the substrate was partially exposed. The slurry was applied so as to achieve the same thickness for both the first active material layer and the second active material layer after compressing (described below). The combination of the first active material layer slurry and the second active material layer slurry used here are shown in Table 1. The coating weights of the first active material layer and the second active material layer applied here were both 65 g/m² per side, 130 g/m² in total. The applying was carried out for both sides of the substrate.

### <<(C1) Drying>>

The first coating film and the second coating film were heated and dried with a batch-type dryer. The heating temperature was 60°C.

### <<(D2) Compressing>>

The first coating film and the second coating film after drying were compressed to produce a negative electrode raw sheet including a first active material layer and a second active material layer. Compression conditions were changed so that a negative electrode active material layer of each of negative electrodes No. 1 to No. 8 had densities [g/cm³] of 1.2, 1.3, 1.4, 1.5, 1.6.

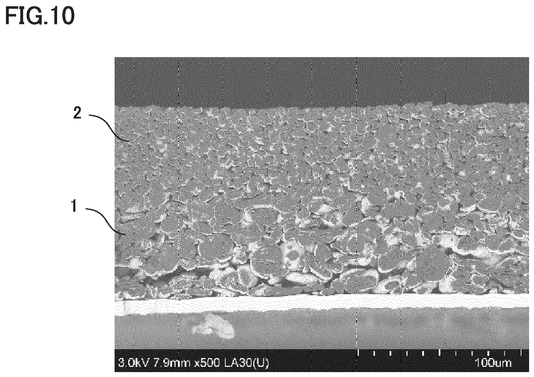

Fig. 9 is an SEM image of a transverse cross section in a thickness direction of negative electrode No. 1. In Fig. 9, capsules 40 having a diameter of 3 µm or more were observed in the second active material layer. Fig. 10 is an SEM image of a transverse cross section in a thickness direction of negative electrode No. 5. In Fig. 10, no voids 40 having a diameter of 3 µm or more were observed in the first active material layer or the second active material layer.

In an SEM image of a transverse cross section in a thickness direction of the prepared negative electrode, the number density of voids having a diameter of 3 µm or more was determined. Results are shown in Table 2.

### <Producing Positive Electrode>

### <<(A2) Preparing Positive Electrode Slurry>>

The below materials were prepared.
Active material particles: LiNi_{1/3}Co_{1/3}Mn_{1/3}O₂
Conductive material: conductive carbon
Binder: PVdF
Organic solvent: NMP
Substrate: Al foil

The active material particles, the binder, the conductive material, and the organic solvent were mixed to prepare a slurry. The mass ratio of the other solid matter was "(active material particles)/(conductive material)/ binder = 97/2/1".

### «(B2) Applying»

The slurry was applied to the surface (both sides) of the substrate to form a coating film. The coating film was formed in such a manner that the substrate was partially exposed.

### «(C2) Drying»

The coating film was heated and dried with a batch-type dryer. The heating temperature was 60°C.

### <<(D2) Compressing>>

The coating film after drying was compressed to produce a positive electrode raw sheet including a positive electrode active material layer.

### <Producing Test Battery>

### <<(E2) Assembling Battery>>

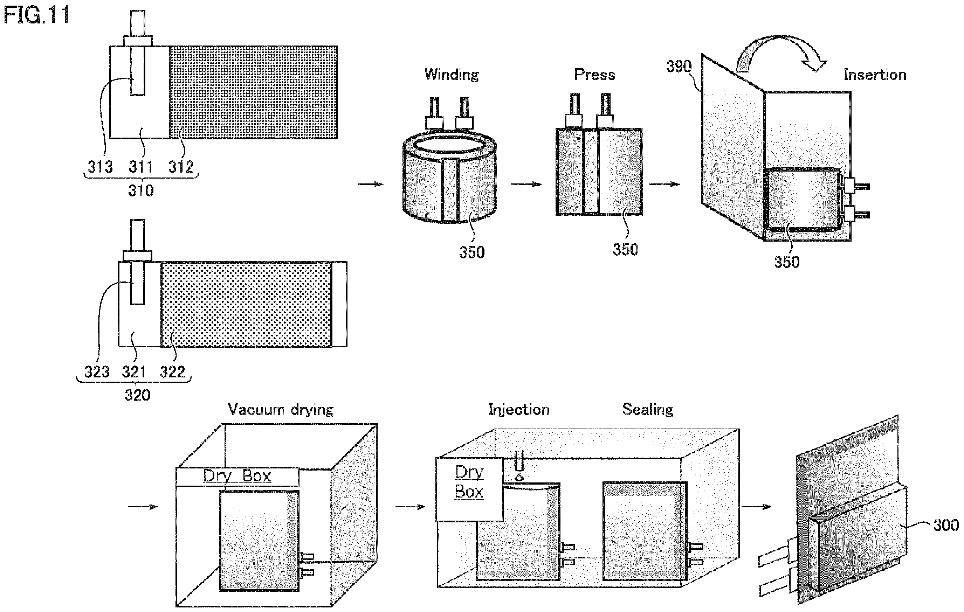

Fig. 11 is a schematic view illustrating a process of assembling a test battery according to the present example.

The positive electrode raw sheet produced in the above manner was cut to form a positive electrode 310. The planar shape of positive electrode 310 was a belt-like shape. Positive electrode 310 had planar dimensions of 50 mm in width and 230 mm in length. Positive electrode 310 included a positive electrode substrate 311 and a positive electrode active material layer 312. Part of positive electrode substrate 311 was exposed from positive electrode active material layer 312. To the exposed portion of positive electrode substrate 311, a positive electrode lead tab 313 was bonded by ultrasonic bonding. The position where positive electrode lead tab 313 was bonded was at a distance of 7 mm from one end in a longitudinal direction.

The negative electrode raw sheet produced in the above manner was cut to form a negative electrode 320. The planar shape of negative electrode 320 was a belt-like shape. Negative electrode 320 had planar dimensions of 52 mm in width and 330 mm in length. Negative electrode 320 included a negative electrode substrate 321 and a negative electrode active material layer 322. Part of negative electrode substrate 321 was exposed from negative electrode active material layer 322. To the exposed portion of negative electrode substrate 321, a negative electrode lead tab 323 was bonded by ultrasonic bonding. The position where negative electrode lead tab 323 was bonded was at a distance of 18 mm from one end in a longitudinal direction.

A separator (not illustrated) was prepared. The separator included a PP layer and a PE layer. Positive electrode 310, the separator, and negative electrode 320 were stacked in this order and then wound spirally to form an electrode assembly 350. Positive electrode lead tab 313 and negative electrode lead tab 323 were on the outer circumference of electrode assembly 350. After the winding, electrode assembly 350 was shaped into a flat form.

A housing 390 was prepared. Housing 390 was made of an aluminum-laminated film. Into housing 390, electrode assembly 350 was inserted. After insertion, the work (housing 390 and electrode assembly 350) was transferred into a dry box. The work was vacuum dried.

An electrolyte solution was prepared. The electrolyte solution included an organic solvent and a supporting electrolyte, which are described below. The ratio of the components of the organic solvent is based on the volume at 25°C and 1 atmospheric pressure.
Organic solvent: "EC/DMC/EMC = 25/35/40 (volume ratio)"
Supporting electrolyte: LiPF₆ (concentration = 1.15 mol/L)

After vacuum drying, the electrolyte solution was injected into housing 390. After the electrolyte solution was injected, housing 390 was hermetically sealed. In this way, a test battery 300 was assembled. It was expected that, inside test battery 300, capsule-shaped particles (the thermoplastic resin) in negative electrode active material layer 322 came into contact with the electrolyte solution.

### <<(F2) Thermal Aging>>

The SOC of the test battery was adjusted. In a thermostatic chamber set at 75°C, the test battery was stored for 16 hours.

By the above-described procedure, in the present example, test batteries No. 1 to No. 8 were produced.

### <Evaluation>

The SOC of each test battery was adjusted to 50%. In an environment at a temperature of 25°C, the test battery was charged and discharged in a constant-current mode. After a lapse of 10 seconds from the start of the charge and discharge, the voltage was measured. At various currents, the voltage after a lapse of 10 seconds from the start of the charge and discharge was measured. The relationship between the current and the voltage was plotted on two-dimensional rectangular coordinates, and thus an I-V plot was created. From the slope of the I-V plot, initial resistance was calculated. The initial resistance is shown in Table 2.

The SOC of each test battery was adjusted to 95%. After the SOC adjustment, the test battery was stored for 60 days in a thermostatic chamber set at 70°C. The discharged capacity of the test battery before and after storage was measured. From the discharged capacity before and after storage, capacity retention was calculated. The capacity retention is shown in Table 2.

**[Table 1]**

| | | No.1 | No.2 | No.3 | No.4 | No.5 | No.6 | No.7 | No.8 |
|---|---|---|---|---|---|---|---|---|---|
| Slurry type | First active material layer | Slurry 1 | Slurry 3 | Slurry 1 | Slurry 1 | Slurry 2 | Slurry 3 | Slurry 4 | Slurry 1 |
| | Second active material layer | Slurry 2 | Slurry 4 | Slurry 4 | Slurry 1 | Slurry 2 | Slurry 3 | Slurry 4 | Slurry 3 |

**[Table 2]**

| | Density of negative electrode active material layer [g/cm³] | No.1 | No.2 | No.3 | No.4 | No.5 | No.6 | No.7 | No.8 |
|---|---|---|---|---|---|---|---|---|---|
| Number density of voids having diameter of 3 µm or more per unit area of first active material layer [/mm²] | 1.2 | 180 | 0 | 180 | 180 | 1300 | 0 | 1300 | 180 |
| | 1.3 | 170 | 0 | 170 | 170 | 1260 | 0 | 1260 | 170 |
| | 1.4 | 160 | 0 | 160 | 160 | 1230 | 0 | 1230 | 160 |
| | 1.5 | 150 | 0 | 150 | 150 | 1200 | 0 | 1200 | 150 |
| | 1.6 | 150 | 0 | 150 | 150 | 1180 | 0 | 1180 | 150 |
| Number density of voids having diameter of 3 µm or more per unit area of second active material layer [/mm²] | 1.2 | 1300 | 1300 | 1300 | 180 | 1300 | 0 | 1300 | 0 |
| | 1.3 | 1260 | 1260 | 1260 | 170 | 1260 | 0 | 1260 | 0 |
| | 1.4 | 1230 | 1230 | 1230 | 160 | 1230 | 0 | 1230 | 0 |
| | 1.5 | 1200 | 1200 | 1200 | 150 | 1200 | 0 | 1200 | 0 |
| | 1.6 | 1180 | 1180 | 1180 | 150 | 1180 | 0 | 1180 | 0 |
| Initial resistance [-]¹⁾ | 1.2 | 84.0 | 68.0 | 68.0 | 94.0 | 85.0 | 75.0 | 70.0 | 75.0 |
| | 1.3 | 85.0 | 70.0 | 69.5 | 95.0 | 89.0 | 77.0 | 73.5 | 76.5 |
| | 1.4 | 88.0 | 74.0 | 72.0 | 97.0 | 93.0 | 80.0 | 78.0 | 79.0 |
| | 1.5 | 93.0 | 78.0 | 74.0 | 100.0 | 98.0 | 85.0 | 84.0 | 84.0 |
| | 1.6 | 98.0 | 85.0 | 79.0 | 105.0 | 104.0 | 92.0 | 91.0 | 90.0 |
| Capacity retention [%] | 1.2 | 95.7 | 91.2 | 94.3 | 95.8 | 95.0 | 91.3 | 91.4 | 94.2 |
| | 1.3 | 95.4 | 91.3 | 94.2 | 95.7 | 94.5 | 91.2 | 91.0 | 94.0 |
| | 1.4 | 94.8 | 90.0 | 93.4 | 95.4 | 93.8 | 90.1 | 89.7 | 93.5 |
| | 1.5 | 93.8 | 88.2 | 92.0 | 94.6 | 92.8 | 88.5 | 87.8 | 92.6 |
| | 1.6 | 92.5 | 85.5 | 90.0 | 93.5 | 91.0 | 86.0 | 84.5 | 91.0 |

| | | | | | | | | | |
|---|---|---|---|---|---|---|---|---|---|
| 1) The values are relative values. The initial resistance when the negative electrode active material layer of No. 4 has a density of 1.5 is defined as 100. | | | | | | | | | |

### <Results>

Each of the second active material layers of No. 1 to No. 3 was produced with a slurry including capsule-shaped particles. Each of the first active material layer and the second active material layer of No. 4, No. 6, and No. 8 was produced with a slurry including no capsule-shaped particles. Each of the first active material layer and the second active material layer of No. 5 and No. 7 was produced with a slurry including capsule-shaped particles.

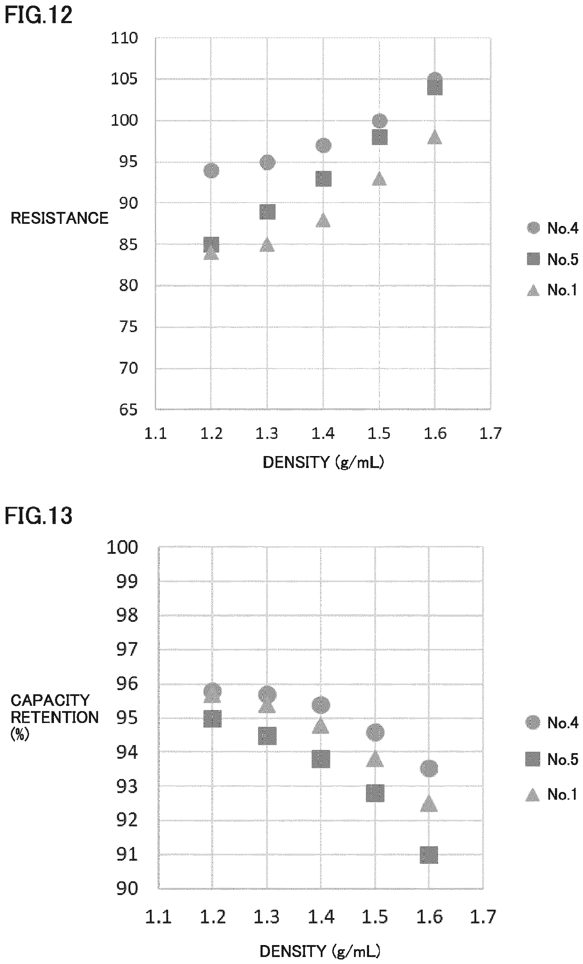

Fig. 12 is a graph of initial resistance relative to the density of the negative electrode layer of No. 1, No. 4, and No. 5. The initial resistance of No. 1 was lower than that of No. 4 and No. 5 at the same density of the negative electrode active material layer. The initial resistance of No. 5 increased along with an increase in density.

Fig. 13 is a graph of capacity retention relative to the density of the negative electrode layer of No. 1, No. 4, and No. 5. A decrease in capacity retention for No. 1 and No. 4 was inhibited at all densities. A decrease in capacity retention for No. 5 was great at all densities.

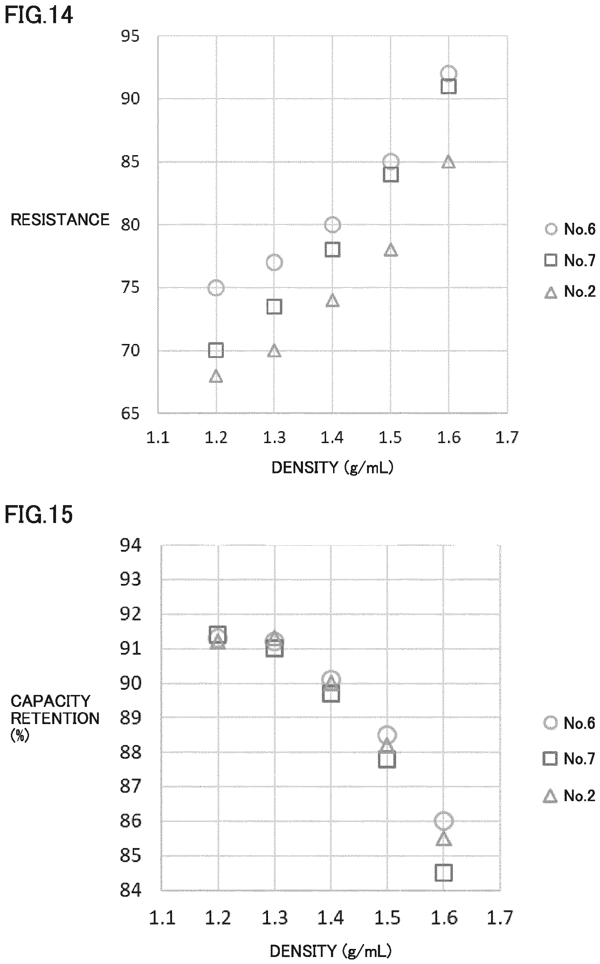

Fig. 14 is a graph of initial resistance relative to the density of the negative electrode layer of No. 2, No. 6, and No. 7. The initial resistance of No. 2 was lower than that of No. 6 and No. 7 at the same density of the negative electrode active material layer. The initial resistance of No. 7 increased along with an increase in density.

Fig. 15 is a graph of capacity retention relative to the density of the negative electrode layer of No. 2, No. 6, and No. 7. A decrease in capacity retention for No. 2 and No. 6 was inhibited at all densities. A decrease in capacity retention for No. 7 became greater along with an increase in density.

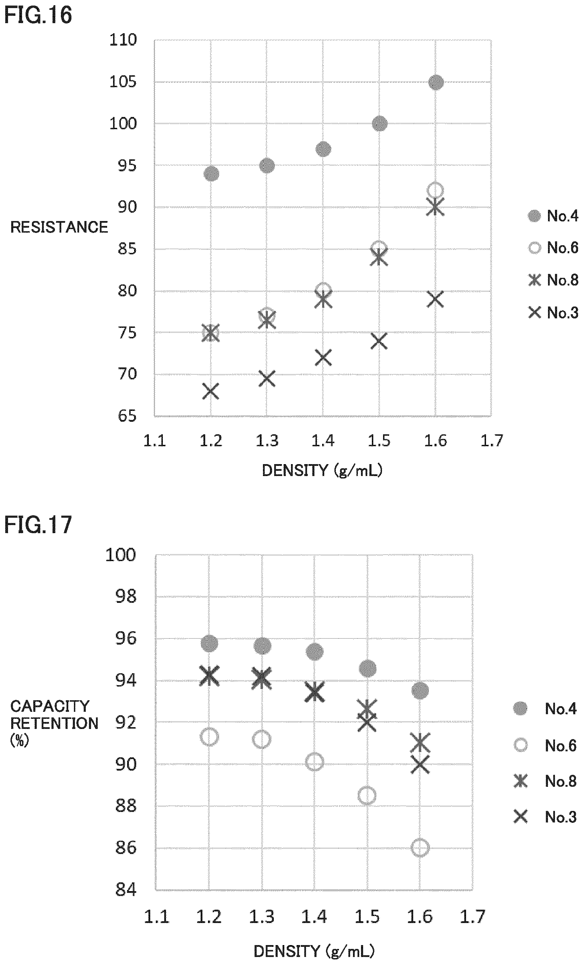

Fig. 16 is a graph of initial resistance relative to the density of the negative electrode layer of No. 3, No. 4, No. 6, and No. 8. The initial resistance of No. 3 was lower than that of No. 4, No. 6, and No. 8 at the same density of the negative electrode active material layer.

Fig. 17 is a graph of capacity retention relative to the density of the negative electrode layer of No. 3, No. 4, No. 6, and No. 8. A decrease in capacity retention for No. 3, No. 4, and No. 8 was inhibited at all densities. A decrease in capacity retention for No. 6 was great at all densities.

The present embodiment and the present example are illustrative in any respect. The present embodiment and the present example are non-restrictive. For example, it is expected that certain configurations of the present embodiments and the present examples can be optionally combined.

Although the embodiments of the present invention have been described, the embodiments disclosed herein are illustrative and non-restrictive in any respect. The scope of the present invention is defined by the terms of the claims, and is intended to encompass any modifications within the meaning and the scope equivalent to the terms of the claims.

## Claims

1. A negative electrode comprising:
a substrate (10); and
a negative electrode active material layer (50), wherein
the negative electrode active material layer (50) has a first active material layer (51) and a second active material layer (52) in this order from a side closer to the substrate (10),
in a transverse cross section parallel to a thickness direction, the first active material layer (51) has a number density of voids (40) having a diameter of 3 µm or more per unit area of less than 200/mm², and
in a transverse cross section parallel to a thickness direction, the second active material layer (52) has a number density of voids (40) having a diameter of 3 µm or more per unit area of from 200/mm² to 1500/mm².

2. The negative electrode according to claim 1, wherein
the first active material layer (51) is composed of first active material particles (1),
the second active material layer (52) is composed of second active material particles (2), and
an average particle size of the second active material particles (2) is less than an average particle size of the first active material particles (1).

3. The negative electrode according to claim 1 or 2, wherein a BET specific surface area of the second active material particles (2) is more than a BET specific surface area of the first active material particles (1).

4. The negative electrode according to any one of claims 1 to 3, wherein a mass density of the second active material layer (52) per unit volume is less than a mass density of the first active material layer (51) per unit volume.

5. The negative electrode according to any one of claims 1 to 4, wherein a thickness of the second active material layer (52) is from 10 µm to 40 µm.

6. The negative electrode according to any one of claims 1 to 5, having a mass density per unit volume of 1.4 g/cm³ or more.

7. The negative electrode according to any one of claims 1 to 6, wherein the second active material layer (52) includes a thermoplastic resin that is degradable in an oxygen-containing atmosphere at a temperature of 200°C or more.

8. A battery comprising a negative electrode (100) according to any one of claims 1 to 7.
